# EUROPEAN PATENT APPLICATION

(11) **EP 4 298 964 A1**
(43) Date of publication of application: **03.01.2024**
(21) Application number: 23755320.1
(22) Date of filing: 07.04.2023
(51) Int. Cl.: A47J 31/02, A47J 31/06

(54) **DRIP ASSISTOR**

(30) Priority: 18.05.2022 JP 2022081829
(71) Applicant: Audio-Technica Corporation, Machida-shi, Tokyo 194-8666 (JP)
(72) Inventor: HIRO, Mizuki, Machida-shi, Tokyo 194-8666 (JP); HIRASATA, Masao, Machida-shi, Tokyo 194-8666 (JP); MAEDA, Kenji, Machida-shi, Tokyo 194-8666 (JP)
(74) Representative: Plougmann Vingtoft a/s
(86) International application number: PCT/JP2023/014399
(87) International publication number: WO 2023/223707

(57) **Abstract**

A drip assist tool to be placed on top of a dripper and help pour hot water into the dripper includes a tubular housing portion 30 that can accommodate the hot water, and a plurality of pouring outlets (a first pouring outlet 52 and a second pouring outlet 54) formed on the central part of a bottom portion 34 of the housing portion 30. The housing portion 30 can be collapsed flat.

## Description

### TECHNICAL FIELD

The present disclosure relates to a drip assist tool to be placed on top of a dripper and help pour hot water into the dripper.

### BACKGROUND OF THE INVENTION

Patent Document 1 below discloses a pour-over dripper for brewing hand drip coffee. This pour-over dripper has a structure in which a liquid injection port part, a liquid injection diffusion part, a filtration part, and a fine powder precipitation part are layered. The liquid diffusion part has a plurality of discharge ports for dripping hot water poured into the liquid injection port part over ground coffee in the filtration part.

### PRIOR ART

### PATENT DOCUMENT

[Patent Document 1] Japanese Unexamined Patent Application Publication No. 2005-296598

### SUMMARY OF THE INVENTION

### PROBLEM TO BE SOLVED BY THE INVENTION

The pour-over dripper described above is bulky because it has a structure in which a plurality of parts are layered. For this reason, it is necessary to secure a storage space when used outdoors, for example. Further, it is hard to carry around since it is bulky.

The present disclosure focuses on these points, and its object is to provide a drip assist tool that is not only excellent in space saving and portability but also can pour hot water stably.

### MEANS FOR SOLVING THE PROBLEM

According to an aspect of the present disclosure, it is provided a drip assist tool to be placed on top of a dripper and help pour hot water into the dripper; the drip assist tool including: a tubular housing portion that can accommodate the hot water; and a plurality of pouring outlets formed on a central part of a bottom portion of the housing portion, wherein the housing portion can be collapsed flat.

Further, the housing portion may be formed with a triangular cylindrical shape. Further, the drip assist tool may further include: a flange portion that is formed to surround an upper end of the housing portion and is engageable with the dripper, wherein the housing portion can be collapsed such that the bottom portion is flush with the flange portion.

Further, the housing portion and the flange portion may be made of rubber having elasticity. Further, the drip assist tool may further include: an engagement portion that is engageable with an upper end of the dripper, the engagement portion being provided at an edge of the flange portion, wherein the engagement portion may be an extension wall portion formed in a manner to extend downward from the edge. Further, the plurality of pouring outlets may include: a first pouring outlet formed at the center of the bottom portion of the housing portion; and a plurality of second pouring outlets formed around the first pouring outlet and having diameters smaller than a diameter of the first pouring outlet.

The first pouring outlet may be formed at the center of a thick wall part which is located on a central part of the bottom portion of the housing portion and has a greater thickness than other portions of the housing portion, and the second pouring outlets may be formed around the first pouring outlet in the thick wall part.

Further, the drip assist tool may further include: a pouring portion that has a triangular shape in a planar view and is formed with the plurality of pouring outlets, wherein the plurality of pouring outlets may include: a first pouring outlet formed at the center, and a second pouring outlet formed at each of three corners. Further, the pouring portion may be formed in a manner to protrude from a bottom portion of the housing portion, and a thickness of the pouring portion may be greater than thicknesses of other portions of the bottom portion. Further, the housing portion may have a wall portion formed with a tubular shape; and a plurality of folding portions formed with an annular shape at positions spaced apart from each other by predetermined intervals in the axial direction of the wall portion and having a thickness smaller than other portions of the wall portion, wherein the housing portion may be collapsed flat by folding the wall portion at respective folding portions such that the folding portions overlap each other.

### EFFECT OF THE INVENTION

According to the present disclosure, it is possible to realize a drip assist tool that is not only excellent in space saving and portability but also can pour hot water stably.

### BRIEF DESCRIPTION OF THE DRAWINGS

FIG. 1 shows a configuration of a dripper set 1 according to an embodiment.
FIG. 2 is a perspective view of a dripper 10.
FIG. 3 is a bottom view of the dripper 10.
FIG. 4 shows a state in which the dripper 10 is folded.
FIG. 5 is a perspective view of a drip assist tool 20.
FIG. 6 is a perspective view of the drip assist tool 20.
FIG. 7 is a planar view of the drip assist tool 20.
FIG. 8 is a cross-sectional view taken along a line A-A of FIG. 7.
FIG. 9 shows a state in which the drip assist tool 20 is collapsed.

### [DESCRIPTION OF EMBODIMENTS]

### <Configuration of a dripper set>

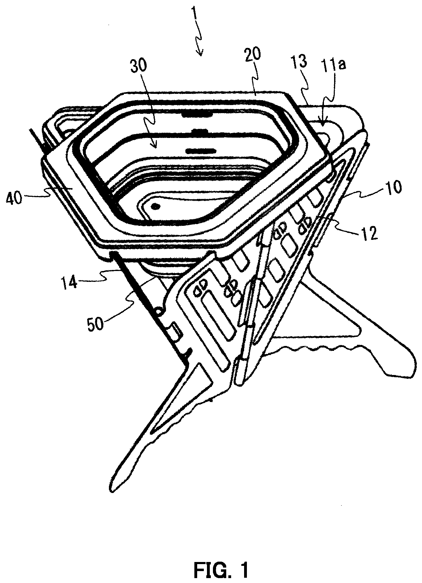

A configuration of a dripper set according to an embodiment of the present disclosure will be described with reference to FIG. 1.

FIG. 1 shows a configuration of a dripper set 1 according to an embodiment. In FIG. 1, for convenience of explanation, a filter (specifically, a filter in which ground coffee is placed) to be set in a dripper 10 is omitted.

The dripper set 1 is used by being set on a cup into which brewed coffee drips, for example. As shown in FIG. 1, the dripper set 1 includes the dripper 10 and a drip assist tool 20, for example.

The dripper 10 is formed with a tubular shape. Here, the dripper 10 is formed with an inverted triangular pyramidal cylindrical shape. However, the shape of the dripper 10 is not limited to this, and the dripper 10 may be formed with a cylindrical shape. The dripper 10 is made of metal

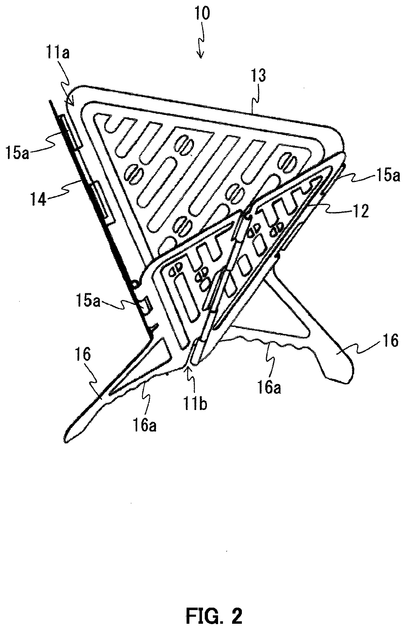

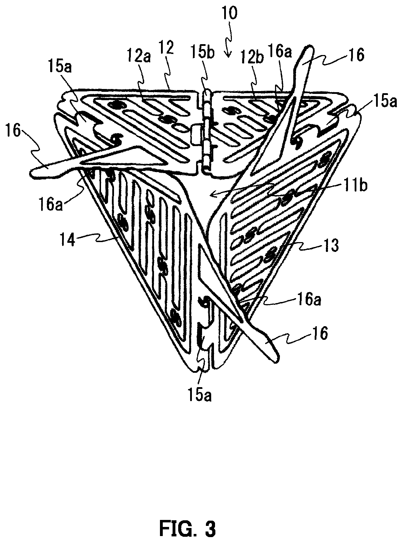

FIG. 2 is a perspective view of the dripper 10. FIG. 3 is a bottom view of the dripper 10. The dripper 10 has an upper opening 11a and a lower opening 11b. The upper opening 11a is an opening for setting a filter. The lower opening 11b is an opening for dripping brewed coffee, and the lower opening 11b side is placed on the cup.

As shown in FIG. 3, three wall portions 12, 13, and 14 of the dripper 10 are connected to each other through a hinge 15a. Specifically, end portions of the wall portions 12, 13, and 14 are connected to each other through the hinge 15a. The wall portion 12 is divided into two, and a first portion 12a and a second portion 12b are connected by a hinge 15b. The wall portions 12, 13, and 14 are each made of a metal plate having a predetermined thickness.

As shown in FIG. 3, the dripper 10 has three leg portions 16. The leg portions 16 are formed in a manner to extend from the wall portions 12, 13, and 14, respectively. The leg portions 16 each have a concave portion 16a for having the cup or the like set thereon. The concave portions 16a are each formed with a wave shape so that cups of various sizes can be positioned thereon. The leg portions 16 have (i) a function of preventing slippage in case the dripper 10 is put on an inclined place and (ii) a stopper function in case the dripper 10 is blown by the wind.

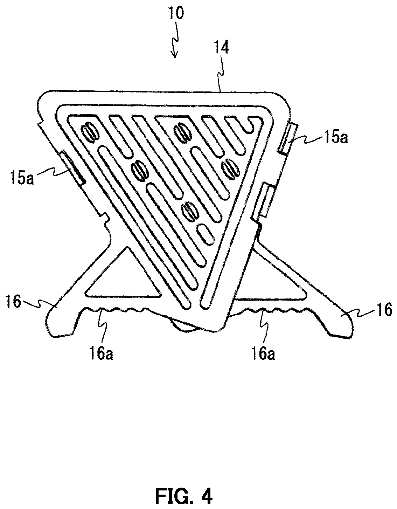

FIG. 4 shows a state in which the dripper 10 is folded. The dripper 10 is foldable. Here, the wall portions 12, 13, and 14 can be folded by rotating them around the hinges 15a and 15b. Specifically, the dripper 10 is folded such that the wall portions 13 and 14 sandwich the folded wall portion 12 (the first portion 12a and the second portion 12b in an overlapped state) folded around the hinge 15b. By doing this, the dripper 10 that has the inverted triangular pyramidal cylindrical shape becomes flat.

The drip assist tool 20 can be set on the upper opening 11a side of the dripper 10, as shown in FIG. 1. The drip assist tool 20 is a part placed in a manner to cover the upper opening 11a of the dripper 10 and is for helping to pour hot water into the dripper 10. For example, when a user pours hot water into a housing portion 30 of the drip assist tool 20, the hot water drips from a pouring portion 50 provided at a bottom portion of the drip assist tool 20 toward the dripper 10.

If there is no drip assist tool 20, a user would have to pour hot water directly into ground coffee added to a filter set in the dripper 10. In such case, if the user is not skilled, extracted coffee is likely to taste poor since the way he/she pours hot water is not proper (specifically, it is likely that the user cannot pour hot water in a steady and slow manner.) For example, in the case of a user who is not used to brewing drip coffee, he/she would pour a large amount of hot water at once.

On the other hand, by using the drip assist tool 20, the present embodiment can prevent the taste of extracted coffee from being ruined even if a user is not used to brewing drip coffee because hot water can be steadily poured little by little into the ground coffee added to the filter. Further, since the drip assist tool 20 is disposed such that it covers the upper opening 11a of the dripper 10, the drip assist tool 20 functions as an upper lid during coffee extraction. Therefore, a decrease in water temperature during the extraction can be suppressed, and the water temperature can be easily controlled to a desired temperature (appropriate temperature). This is particularly effective when coffee is extracted outdoors where water temperature is susceptible to the outside air temperature.

### <Detailed configuration of a drip assist tool>

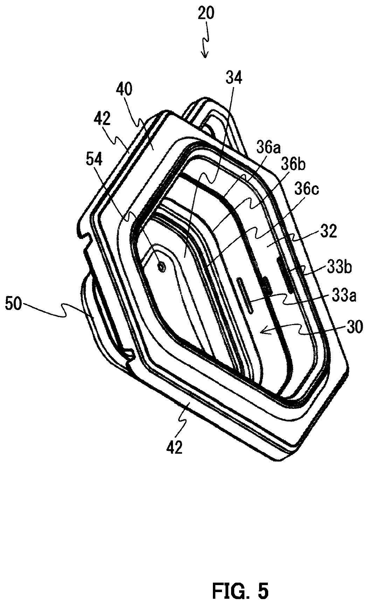

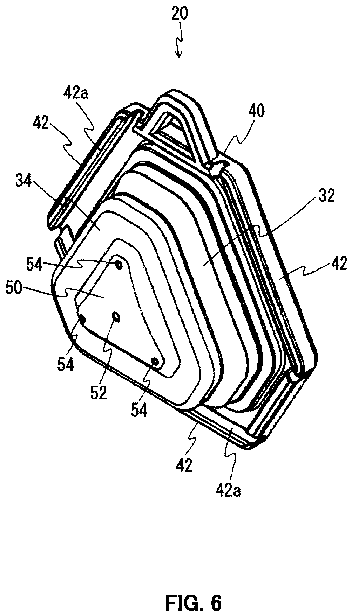

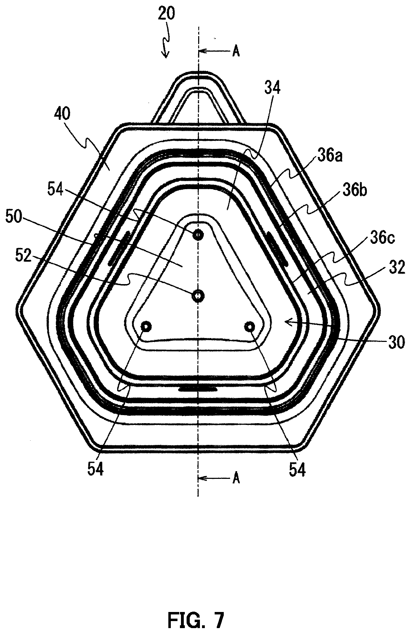

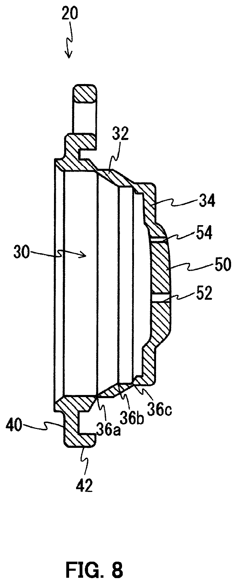

A detailed configuration of the drip assist tool 20 will be described with reference to FIGS. 5 to 8. FIGS. 5 and 6 are each a perspective view of the drip assist tool 20. FIG. 7 is a planar view of the drip assist tool 20. FIG. 8 is a cross-sectional view taken along a line A-A of FIG. 7.

The drip assist tool 20 is made of rubber, for example, and is specifically made of silicone rubber. Therefore, the drip assist tool 20 is flexible and elastically deformable. As shown in FIG. 5, the drip assist tool 20 includes the housing portion 30, a flange portion 40, and a pouring portion 50.

The housing portion 30 is formed with a tubular shape, and can accommodate hot water poured by a user. The housing portion 30 has a shape corresponding to the shape of the upper opening 11a of the dripper 10, and is formed with a triangular cylindrical shape as shown in FIG. 6. However, the shape of the housing portion 30 is not limited to this, and the housing portion 30 may be formed with a cylindrical shape, for example.

As shown in FIG. 5, the housing portion 30 includes a wall portion 32, a bottom portion 34, and folding portions 36a, 36b, and 36c. The wall portion 32 is formed with a tubular shape. The wall portion 32 is inclined such that its width decreases toward the bottom portion 34, as shown in FIG. 8. The wall portion 32 has mark portions 33a and 33b each indicating an amount of the accommodated hot water on an inner peripheral surface, as shown in FIG. 5. The mark portions 33a and 33b are each formed in a manner to protrude from the inner peripheral surface of the wall portion 32. The user can determine that the desired amount of hot water has been poured when the hot water poured into the housing portion 30 reaches the mark portion 33a or33b.

The bottom portion 34 is connected to a lower portion of the wall portion 32, and forms a bottom surface of the housing portion 30. A shape of the bottom portion 34 when viewed from above is approximately triangular, as shown in FIG. 7. The pouring portion 50 is provided on the central part of the bottom portion 34.

The folding portions 36a, 36b, and 36c are portions of the wall portion 32 to be bent. As shown in FIG. 7, the folding portions 36a, 36b, and 36c are formed with an annular shape at positions spaced apart from each other by predetermined intervals (for example, at equal intervals) in the axial direction of the wall portion 32. A thickness of the folding portions 36a, 36b, and 36c is smaller than that of other portions of the wall portion 32 in order to facilitate easy folding. Here, the wall portion 32 has three folding portions 36a, 36b, and 36c, but the present disclosure is not limited thereto, and the wall portion 32 may have two folding portions or four or more folding portions. It should be noted that since the housing portion 30 is formed with the triangular cylindrical shape, the housing portion 30 can be easily bent at the folding portions 36a, 36b, and 36c.

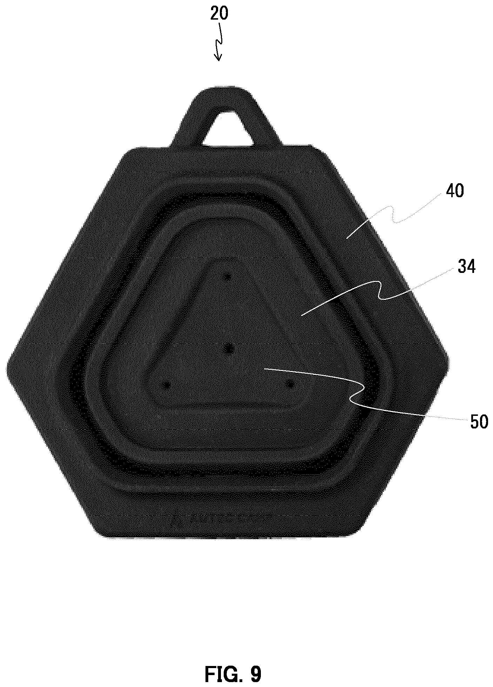

FIG. 9 shows a state in which the drip assist tool 20 is collapsed. FIG. 9 shows a collapsed state when the drip assist tool 20 is photographed from above. As shown in FIG. 9, the housing portion 30 can be collapsed flat. In other words, the housing portion 30 is collapsible such that the bottom portion 34 is flush with the flange portion 40. Specifically, by folding the wall portion 32 of the housing portion 30 at the folding portions 36a, 36b, and 36c such that they overlap each other, the bottom portion 34 and the flange portion 40 become adjacent to each other. A thickness of the drip assist tool 20 in the collapsed state is about 1/3 to V4 of a thickness of the drip assist tool 20 before being folded. Portability of the drip assist tool 20 is enhanced since the overall drip assist tool 20 is flattened in this manner. In particular, since the dripper 10 is folded flat as well, as described above, it is easy to carry the dripper set 1 when used outdoors, for example.

As shown in FIG. 5, the flange portion 40 is formed with an annular shape such that it surrounds an upper end of the housing portion 30. As shown in FIG. 1, an edge of the flange portion 40 is located outside the wall portions 12, 13, and 14 of the dripper 10. Therefore, when the drip assist tool 20 is placed on the dripper 10, a lower surfac e of the flange portion 40 comes into contact with upper ends of the wall portions 12, 13, and 14 of the dripper 10.

The flange portion 40 is engageable with the dripper 10. Specifically, the edge of the flange portion 40 includes a plurality of engagement portions 42 that engage with the upper end of the dripper 10, as shown in FIG. 6. Each of the plurality of engagement portions 42 is an extension wall formed in a manner to extend downward from the edge of the flange portion 40. The plurality of engagement portions 42 are engaged with the upper end of the dripper 10 in a state where an inner peripheral surface 42a of the extension wall faces outer surfaces of the wall portions 12, 13, and 14 of the dripper 10 (see FIG. 1).

The pouring portion 50 is a portion for dripping the hot water in the housing portion 30 into the dripper 10. As shown in FIG. 6, the pouring portion 50 is located on the central part of the bottom portion 34 of the housing portion 30. A plurality of pouring outlets are formed in the pouring portion 50. The hot water poured into the housing portion 30 is dripped into the dripper 10 through the plurality of pouring outlets.

As shown in FIG. 7, the pouring portion 50 includes a first pouring outlet 52 and a second pouring outlet 54, which serve as the plurality of pouring outlets. The first pouring outlet 52 is formed at the center of the pouring portion 50, and a plurality of second pouring outlets 54 are formed around the first pouring outlet 52. The pouring portion 50 is curved such that the central part is recessed, as shown in FIG. 8. This enables the hot water to flow easily to the first pouring outlet 52 having a large diameter when an amount of the hot water becomes low, and therefore residual hot water is less likely to occur in the pouring portion 50.

Each of the plurality of second pouring outlets 54 is separated from the first pouring outlet 52 by the same distance. This makes it easier for the hot water in the housing portion 30 to drip evenly to the dripper 10. The diameters of the plurality of second pouring outlets 54 are the same, and are smaller than the diameter of the first pouring outlet 52. In this case, when water pressure of the hot water in the housing portion 30 decreases, the hot water is dripped from the first pouring outlet 52, and therefore it is possible to suppress an occurrence of residual hot water. When the diameter of the second pouring outlet 54 is set to be equal to the diameter of the first pouring outlet 52, it becomes difficult to drip the hot water slowly. In the above description, three second pouring outlets 54 are formed, but the number of the second pouring outlets 54 is not limited thereto and may be four or more. Further, one first pouring outlet 52 is provided in the above description, but the number of first pouring outlets 52 is not limited thereto and a plurality of first pouring outlets 52 may be provided.

As shown in FIG. 8, the pouring portion 50 is formed in a manner to protrude from the bottom portion 34. As shown in FIG. 8, the pouring portion 50 is a thick wall part having a greater thickness than other portions of the housing portion 30. Therefore, the first pouring outlet 52 and the second pouring outlets 54 are formed in a thick wall part of the bottom portion 34 of the housing portion 30. By doing this, the length of the first pouring outlet 52 and the second pouring outlets 54, which are the through holes, can be increased. Since the length of the first pouring outlet 52 and the second pouring outlets 54 is increased, the water pressure can be easily ensured even when the water level of the hot water in the housing portion 30 is lowered, and therefore the occurrence of residual hot water in the housing portion 30 is suppressed. The first pouring outlet 52 and the second pouring outlets 54 may be formed in a cylindrically protruding part of the pouring portion 50. Even in this case, the length of the first pouring outlet 52 and the second pouring outlet can be increased.

As shown in FIG. 6, the pouring portion 50 has a triangular shape in a planar view. The first pouring outlet 52 is formed at the center of the triangular pouring portion 50, and the second pouring outlets 54 are formed at each of three corners of the triangular pouring portion 50. By positioning the first pouring outlet 52 and the second pouring outlets 54 as described above, hot water can be evenly poured into the ground coffee added to the filter in the inverse triangular pyramidal cylindrical dripper 10. In addition, it is possible to prevent hot water from deviating from the ground coffee and hitting a filter.

Even if boiling water is poured into the housing portion 30, it is possible to extract coffee at an appropriate temperature by using the drip assist tool 20 of the present embodiment, as described below. When hot water is poured directly into ground coffee in a dripper without a drip assist tool, it is generally desirable to pour hot water at around 90 °C (specifically, 87 °C to 93 °C.) On the other hand, in the case where the drip assist tool 20 of the present embodiment is used, the temperature of hot water decreases before the hot water drips into ground coffee through the drip assist tool 20. The temperature of hot water decreases due to heat radiation from an upper surface of the hot water accommodated in the housing portion 30 and heat radiation that occurs when the hot water drips slowly in thin streams (the radiation amount is larger in this case because the hot water is exposed to the outside air more and for a longer time than the case where hot water drips quickly in thick streams) from the first pouring outlet 52 and the second pouring outlets 54. When boiling water is poured into the drip assist tool 20 to drip into ground coffee, coffee at the same temperature as when hot water at about 90 °C is poured directly into the ground coffee is extracted. Therefore, when the drip assist tool 20 is used, coffee can be extracted immediately using boiling water. Further, in most of the cases of outdoor use, there is no thermometer, and therefore it is difficult to control water temperature. Thus, it is difficult to pour hot water at around 90 °C. On the other hand, in the case of the present embodiment, simply by pouring boiling water into the drip assist tool 20, coffee can be extracted in the same manner as in the case of dripping with hot water at the appropriate temperature, even outdoors.

Further, in the present embodiment, since the drip assist tool 20 covers the upper opening 11a of the dripper 10, the drip assist tool 20 has an effect of an upper lid during coffee extraction, and therefore the temperature decrease of water temperature during the extraction can be suppressed.

The pouring portion 50 of the drip assist tool 20 is positioned below the upper end of the dripper 10, as shown in FIG. 1. In this case, the bottom portion 34 including the pouring portion 50 is located below the upper opening 11a of the dripper 10, and serves as a lid during coffee extraction. Further, even though the hot water in the housing portion 30 decreases during the coffee extraction, a heat retention effect can be increased by the hot water remaining in the housing portion 30.

The center position of the housing portion 30 in the vertical direction may be positioned below the upper end of the dripper 10 (see FIG. 1). In such a case, since the bottom portion 34 is located near the ground coffee in a filter set in the dripper 10, a distance up to the point where the hot water drips into the ground coffee becomes short. Therefore, the hot water gently drips into the ground coffee.

A thickness of the bottom portion 34 of the housing portion 30 is larger than the thickness of the wall portions 12, 13, 14 of the dripper 10 (see FIG. 1). In this case, a thermal insulation effect by the bottom portion 34 of the housing portion 30, serving as the upper lid, is increased, and the heat retaining effect during coffee extraction is likely to be increased.

According to experimental results, when the drip assist tool 20 is used, the temperature of coffee to be extracted is higher by 1 °C to 4 °C than when the drip assist tool 20 is not used. One of the reasons for a range in temperature is that it is affected by the outside air temperature.

### <Usage example of the dripper set>

A usage example of the dripper set 1 having the above described configuration will be described below.

First, a user places, on top of a cup, the dripper 10 in which a filter is set. At this time, an upper end of the filter protrudes from the upper end of the dripper 10. In this state, the user adds ground coffee to the filter.

Next, the user places the drip assist tool 20 on the dripper 10. Specifically, the user sets the drip assist tool 20 such that the engagement portions 42 of the drip assist tool 20 engage with the upper ends of the wall portions 12, 13, 14 of the dripper 10. At this time, the drip assist tool 20 is set to the dripper 10 so as to sandwich a portion of the filter sticking out from the dripper 10.

Next, the user pours a first predetermined amount of boiling water into the housing portion 30 of the drip assist tool 20. The first predetermined amount corresponds to an amount of hot water for steaming the ground coffee in a filter. The hot water poured into the housing portion 30 drips over the ground coffee through the first pouring outlet 52 and the second pouring outlets 54 of the drip assist tool 20. The ground coffee is steamed by the dripped hot water.

Next, the user pours a second predetermined amount of boiling water into the housing portion 30 to extract coffee. The second predetermined amount is greater than the first predetermined amount. The hot water poured into the housing portion 30 slowly drips into the ground coffee through the first pouring outlet 52 and the second pouring outlets 54 of the drip assist tool 20. Since the first pouring outlet 52 and the second pouring outlets 54 of the housing portion 30 are located on the central part of the bottom portion 34, the hot water is dripped over the ground coffee and is not dripped to the filter. This prevents the taste of coffee from being ruined due to the hot water flowing along the wall portions 12, 13, and 14.

The hot water in the housing portion 30 slowly drips in thin, gentle streams into the ground coffee through the first pouring outlet 52 and the second pouring outlets 54. As a result, the ground coffee in the filter will not be stirred up, and therefore pure flavor of the ground coffee will be extracted since a harsh taste of the ground coffee hardly comes out. Brewed coffee drips into the cup below the dripper 10. The temperature of the boiling water poured into the housing portion 30 drops slightly before dripping into the ground coffee through the first pouring outlet 52 and the second pouring outlets 54, and therefore it reaches the appropriate temperature to bring out good flavor with almost no harsh taste of the ground coffee. Further, since the housing portion 30 is located near the ground coffee and functions as the upper lid, a decrease in temperature during the extraction can be suppressed, and the water temperature can be controlled at the appropriate temperature.

Then, the user pours the second predetermined amount into the housing portion 30 again to extract coffee. The user can extract a desired amount of coffee by performing an action of pouring only the second predetermined amount of hot water into the housing portion 30 multiple times. Performing this action multiple times makes the time during which the hot water is accommodated in the housing portion 30 longer, and a heat retention effect by the drip assist tool 20 lasts longer.

### <Effects of the present embodiment>

The drip assist tool 20 according to the present embodiment described above includes the tubular housing portion 30 capable of housing hot water, and the first pouring outlet 52 and the second pouring outlets 54 formed on the central part of the bottom portion 34 of the housing portion 30. The housing portion 30 can be collapsed flat. Specifically, the wall portion 32 is folded such that the bottom portion 34 of the housing portion 30 is flush with the flange portion 40. Since the housing portion 30 can be collapsed flat when hot water is not poured into the housing portion 30, the housing portion 30 is not bulky and is excellent in space saving. In addition, it is easily portable when carrying the drip assist tool 20 for extracting coffee outdoors. On the other hand, when coffee is to be extracted, hot water can be stably poured into the dripper 10 by the first pouring outlet 52 and the second pouring outlets 54 formed on the central part of the bottom portion 34 of the housing portion 30.

The present invention is explained on the basis of the exemplary embodiments. The technical scope of the present invention is not limited to the scope explained in the above embodiments and it is possible to make various changes and modifications within the scope of the invention. For example, all or portion of the apparatus can be configured with any unit which is functionally or physically dispersed or integrated. Further, new exemplary embodiments generated by arbitrary combinations of them are included in the exemplary embodiments of the present invention. Further, effects of the new exemplary embodiments brought by the combinations also have the effects of the original exemplary embodiments.

### [Description of Symbols]

- 1: Dripper set
- 10: Dripper
- 11a: Upper opening
- 20: Drip assist tool
- 30: Housing portion
- 32: Wall portion
- 34: Bottom portion
- 40: Flange portion
- 42: Engagement portion
- 50: Pouring portion
- 52: First pouring outlet
- 54: Second pouring outlet

## Claims

1. A drip assist tool to be placed on top of a dripper and help pour hot water into the dripper; the drip assist tool comprising:
a tubular housing portion that can accommodate the hot water; and
a plurality of pouring outlets formed on a central part of a bottom portion of the housing portion, wherein
the housing portion can be collapsed flat.

2. The drip assist tool according to claim 1, wherein the housing portion is formed with a triangular cylindrical shape.

3. The drip assist tool according to claim 1, further comprising:
a flange portion that is formed to surround an upper end of the housing portion and is engageable with the dripper, wherein
the housing portion can be collapsed such that the bottom portion is flush with the flange portion.

4. The drip assist tool according to claim 3, wherein the housing portion and the flange portion are made of rubber having elasticity.

5. The drip assist tool according to claim 3, further comprising:
an engagement portion that is engageable with an upper end of the dripper, the engagement portion being provided at an edge of the flange portion, wherein
the engagement portion is an extension wall portion formed in a manner to extend downward from the edge.

6. The drip assist tool according to claim 1, wherein
the plurality of pouring outlets include:
a first pouring outlet formed at the center of the bottom portion of the housing portion; and
a plurality of second pouring outlets formed around the first pouring outlet and having diameters smaller than a diameter of the first pouring outlet.

7. The drip assist tool according to claim 6, wherein
the first pouring outlet is formed at the center of a thick wall part which is located on a central part of the bottom portion of the housing portion and has a greater thickness than other portions of the housing portion, and
the second pouring outlets are formed around the first pouring outlet in the thick wall part.

8. The drip assist tool according to claim 2, further comprising:
a pouring portion that has a triangular shape in a planar view and is formed with the plurality of pouring outlets, wherein
the plurality of pouring outlets include:
a first pouring outlet formed at the center, and
a second pouring outlet formed at each of three corners.

9. The drip assist tool according to claim 8, wherein
the pouring portion is formed in a manner to protrude from a bottom portion of the housing portion, and
a thickness of the pouring portion is greater than thicknesses of other portions of the bottom portion.

10. The drip assist tool according to claim 1, wherein the housing portion has
a wall portion formed with a tubular shape; and
a plurality of folding portions formed with an annular shape at positions spaced apart from each other by predetermined intervals in the axial direction of the wall portion and having a thickness smaller than other portions of the wall portion, wherein
the housing portion is collapsed flat by folding the wall portion at respective folding portions such that the folding portions overlap each other.
